Europäisches Patentamt

European Patent Office

Office européen des brevets

(19)

(11) Numéro de publication: **0 006 212**
**B1**

(12) **FASCICULE DE BREVET EUROPEEN**

(45) Date de publication du fascicule de brevet: **05.08.81**

(21) Numéro de dépôt: **79101888.0**

(22) Date de dépôt: **11.06.79**

(51) Int. Cl.³: **A 01 N 25/06,**
**A 01 N 57/00**

(54) **Système de pulvérisation sous forme d'aérosol.**

(30) Priorité: **20.06.78 LU 79847**

(43) Date de publication de la demande:
**09.01.80 Bulletin 80/1**

(45) Mention de la délivrance du brevet:
**05.08.81 Bulletin 81/31**

(84) Etats Contractants Désignés:
**CH FR IT**

(56) Documents cités:
**BE - A - 688 664**
**GB - B - 952 004**
**US - A - 2 524 590**

(73) Titulaire: **Airwick AG**
**Postfach**
**CH-4002 Basel (CH)**

(72) Inventeur: **Hennart, Claude**
**Le Clos Baron**
**F-95000 Seraincourt (FR)**
Inventeur: **Boulou, Marie-Claude**
**La Gannerie**
**F-86170 Cissé (Neuville) Vienne (FR)**

(74) Mandataire: **Schirner, Rolf et al,**
**Patentabteilung der CIBA-GEIGY AG Postfach**
**CH-4002 Basel (CH)**

Courier Press, Leamington Spa, England.

## 0 006 212

## Système de pulvérisation sous forme d'aérosol

La présente invention concerne un système de pulverisation en forme d'aérosol, comprenant un récipient fermé, de préférence un boîtier, sous pression, un produit pulvérisable en forme d'aérosol destiné à la lutte contre les insectes et un dispositif de décharge du produit en quantités contrôlées, associé avec le récipient.

Le système est destiné, en particulier, a la lutte contre les insectes dans les maisons et dans les jardins.

Il est connu de réaliser des aérosols insecticides en enfermant, dans un boîtier, sous pression, une substance insecticide, en solution dans un solvant, et un gaz comprimé liquéfié ou non.

Les solvants ainsi couramment utilisés sont des hydrocarbures d'origine pétrolière ou de synthèse ou des composés chlorés. Ces solvants sont maintenant devenus très onéreux; en outre ils sont ou bien inflammables, ou bien toxiques et leurs mélanges présentent souvent ce double inconvénient. De plus, lorsque le traitement insecticide est destiné à des plantes, ces solvants procurent des brûlures sur les diverses parties aériennes des végétaux.

Pour ces diverses raisons, on a cherché à faire des produits aérosols constitués par une suspension dans l'eau de la substance insecticide. Mais il existe des matières insecticides, très intéressantes sur le plan de l'efficacité et du coût, qui ne peuvent supporter un séjour prolongé dans un milieu aqueux. Tel est le malathion dont le spectre d'application insecticide et l'efficacité sont très étendus.

Selon J. LHOSTE (Les insecticides de synthèse, 1962, p. 108; la lutte chimique contre les insectes nuisibles, 1967, p. 268), le malathion est instable en présence d'humidité et, en outre, les récipients métalliques tels que, notamment, le fer et l'aluminium, ne peuvent le contenir sans dégradation de cette substance active.

Suivant l'Index Phytosanitaire de l'Association de Coordination Technique Agricole (1977 p. 141), le malathion est instable en présence d'humidité. D'après le Scientific Guide to Pest Control Operations (1976, p. 60), les émulsions aqueuses de malathion doivent être utilisées le jour même de leur préparation car, durant la nuit suivante, la substance active peut être décomposée au contact de l'eau. Dans le Pesticidal Formulations Research (Van Valkenburg, 1969, p. 96), il est dit que le stabilité du malathion est affectée par le présence d'eau dans les formulations et il est donné un diagramme établissant une corrélation entre la décomposition et l'humidité présente.

De même, selon BRADY & Al. (J. Econ, Entomol., 1963, *56*, 478), le diméthoate est facilement hydrolysé pour former divers acides phosphoriques. Selon HARVEY & Al. (Pesticidal Formulations Research, Am. Chem. Soc., 1969, p. 81) l'azinphos-méthyl est facilement décomposé en présence d'eau. Selon GIANG et SCHECHTER (J. Agr. Food Chem., 1958, *6*, 845), cette substance peut être facilement hydrolysée pour donner du formaldéhyde. PLAPP at CASIDA (J. Econ. Entomol., 1958, *51*, 800) décrit le comportement à l'hydrolyse de divers esters phosphoriques tels que le diazinon, le parathion, l'oxoparathion, le chlorthion, le parathion-methyl et le dicapthon. Ces mêmes auteurs (J. Agr. Food, 1958, *6*, 662) indiquent aussi le comportement à l'hydrolyse du fenchlorphos qui subit une déméthylation.

HASCOET (18th Intern. IUPAC Congress, 1961) indique que l'endothion subit une déméthylation par hydrolyse.

SHISHIDO et FUKAMI (Botgu Kagaku, 1963, *28*, 69) montrent que le fénitrothion, le parathion-méthyl, le fénitrothion-éthyl et l'oxoparathion subissent une déalkylation par hydrolyse avec formation de l'alcanol correspondant.

METIVIER (Pesticides Chem., Proc. IInd Intern. IUPAC Congress, 1972) décrivent l'hydrolyse de la phosalone sous l'action de l'eau. La comparaison des vitesses d'hydrolyse est faite par GATTERDAM & Al. (J. Econ. Entomol., 1959, *52*, 270)' pour divers insecticides organophosphorés tels que la phosdrine et d'autres esters vinyliques substitués.

RUZICKA & Al. (J. Chromatog., 1967, p. 42) donnent une comparaison générale des vitesses d'hydrolyse des insecticides organophosphorés qui montre que ces composés sont facilement décomposés par l'eau.

Pour cette raison, dans le pratique, on prépare des émulsions pulvérisables contenant le malathion, ou autres insecticides souffrant une décomposition en cas de stockage prolongé en milieu aqueux, sur place peu de temps avant l'usage comme elle est décrite notamment dans la DE-OS 2.328.374 de Procter et Gamble Co. ou dans la FR-PA 2.081.844 des sociétés Chloeming S.A. et CIBA-GEIGY AG, ou dans le GB-PS 1.036.956 de Shell Internationale Research Maatschappij. N.V. Evidemment il y aurait un grand inconvénient à préparer de telles émulsions, dans les maisons ou dans les jardins, où la pulvérisation s'effectue de préférance au moyen de "bombes" aérosols conventionelles, car les gens qui y vivent ne disposent généralement pas du matériel nécessaire à la pulvérisation de produits liquides. En outre, les suspensions de particules solides provoquent généralement des taches sur les supports où vient se poser la pulvérisation, et en particulier sur les feuilles des végétaux. L'invention cherche donce à résoudre le problème sus-exposé et à réaliser un système de pulvérisation comme décrit plus haut, qui reste stable pendant un stockage prolongé, donc évitant la nécessité d'une préparation sur place et/ou peu de temps avant l'utilisation, ledit système ne

**0 006 212**

formant pas de taches après séchage lorsque la suspension qui le contient est pulvérisée sur une surface.

Il a été trouvé par le déposant qu'il était possible de réaliser un système pour aérosol qui contient comme produit pulvérisable des formulations stables, même dans le cas d'un stockage prolongé, formulations qui comprennent le malathion ou autre composé similaire comme substance insecticide et l'eau comme principal constituant et que l'emballage renfermant cette formulation pouvait, de plus, être en métal tel que, notamment, l'aluminium.

Ce système selon l'invention est caractérisé en ce que ledit produit comprend pour cent parties en poids de formation:

(A) 0,05 a 3 parties en poids d'un insecticide organophosphoré solide ou liquide insoluble ou peu soluble dans l'eau et souffrant une décomposition en cas de stockage prolongé dans un milieu aqueux, ledit insecticide étant présent en quantité suffisante pour le contrôle des insectes;

(B) 0,2 à 10 parties en poids d'un constituant hydrocarbure, liquide à 20°C, ayant un point d'ébullition compris entre 110 et 250°C, et comprenant au moins de dixième de son poids en composé aromatique ou alkylaromatique; donc, 0,02 à une partie dudit composé pour cent parties en poids de formulations au minimum, et la totalité de l'hydrocarbure au maximum;

(C) 0,1 à 1 partie en poids d'un agent tensio-actif, choisi parmi ceux capables de mettre le mélange (A) + (B) en émulsion dans l'eau,

(D) un agent propulseur choisi parmi les gaz comprimés solubles dans l'eau, tels que le protoxyde d'azote et l'anhydride carbonique, présent en quantité suffisante pour assurer un vidage complet de l'emballage au cours du fonctionnement, et

(E) de l'eau.

La quantité de solvant organique miscible à l'eau qui peut être présente doit être inférieure à celle qui rendrait instable l'émulsion "huile dans l'eau" que la mélange (A) + (B) forme avec de l'eau.

L'insecticide défini sous (A) est de préférence choisi parmi les composées insecticides ayant une durée de demi-vie comprise entre 5 et 50 heures lorsqu'elles sont maintenues à 70°C dans un mélange eau/éthanol (4:1 parties en volume) tamponné à pH 6. De tels composés insecticides sont décrits dans l'ouvrage de M. ETO (Organophosphorous Pesticides, Organic and Biological Chemistry, CRC Press, 1974, p 58).

Il a été trouvé que les composés insecticides de ce type dont la demi-vie ainsi définie est supérieure à 5 heures peuvent être utilisés avec une bonne stabilité dans les formulations selon l'invention.

Parmi ces composés insecticides organophosphorés (A), peuvent être utilisés, par exemple, les suivants (les durées de demi-vie sont indiquées dans la colonne de droite):

| | |
|---|---|
| Dithiophosphate de O,O-diméthyle et S-[bis-(éthoxycarbonyl)-1,2-éthyle] (MALATHION) | 7,8 |
| Thiophosphate de O,O-diméthyle et S-(éthylthio-2 éthyle) (DIOXYDEMETON-METHYL) | 5,1 |
| Dithiophosphate de O,O-diéthyle et S-(N-éthoxycarbonyl N-méthylcarbamoyl méthyle) (MECARBAM) | 5,9 |
| Thiophosphate de O,O-diméthyle et S-(bis-éthoxycarbonyl-1,2 éthyle) (MALAOXON) | 7,0 |
| Thiophosphate de O,O-diméthyle et S-(éthylsulfonyl-2 éthyle) (DEMETON-METHYL) | 7,6 |
| Phosphate de O,O-diéthyle et O-(pyrazinyle-2) (OXOTHIONAZINE) | 8,2 |
| Thiophosphate de O,O-diméthyle et O-(nitro-4 phényle) (PARATHION-METHYL) | 8,4 |
| Thiophosphate de O,O-diméthyle et O-(trichloro-2,4,5 phényle) (FENCHLORPHOS) | 10,4 |
| Dithiophosphate de O,O-diméthyle et S-(dihydro-3,4 oxo-4 benzo-d-triazine-1,2,3 yl-3) méthyle (AZINPHOS-METHYL) | 10,4 |
| Phosphate de O,O-diméthyle et O-(diéthylcarbamoyl-2 chloro-2 méthyl-1) vinyle (ALPHA-PHOSPHAMIDON) | 10,5 (*) |

(*) L'isomère BETA possède une durée de demi-vie égale à 14,0.

| | |
|---|---|
| Thiophosphate de O,O-diméthyle et O-(méthyl-3 nitro-4-phényle) (FENITROTHION) | 11,2 |
| Dithiophosphate de O,O-diméthyle et S-méthylcarbamoyl méthyle (DIMETHOATE) | 12,0 |
| Dithiophosphate de O,O-diméthyle et S-(éthylthio-2 éthyle) (THIOMETON) | 17,0 |
| Thiophosphate de O,O-diméthyle et S-(éthylsulfinyl-2 éthyle) (OXYDEMETON) | 17,1 |
| Thiophosphate de O,O-diéthyle et S-(éthylthio-2 éthyle) (DEMETON) | 18,0 |
| Dithiophosphate de O,O-diméthyle et S-morpholinocarbonyl méthyle (MORPHOTHION) | 18,4 |
| Thiophosphate de O,O-diméthyle et O-(méthyl-3 méthylthio-4 phényle) (FENTHION) | 22,4 |
| Thiophosphate de O,O-diméthyle et S-(méthyl-carbamoyl-1 éthylthio)-2 éthyle (VAMIDOTHION) | 25,4 |
| Dithiophosphate de O,O-diméthyle et S-(diamino-4,6 sym. triazinyl-2) méthyle (MENAZON) | 27,6 |
| Phosphate de O,O-diéthyle et O-(nitro-4 phényle) (OXOPARATHION) | 28,0 |
| Thiophosphate de O,O-diéthyle et O-(pyrazinyl-2) (THIONAZIN) | 29,2 |
| Dithiophosphate de O,O-diéthyle et S-(éthylthio-2 éthyle) (DISULFOTON) | 32,0 |
| Thiophosphate de O,O-diéthyle et O-(isopropyl-2 méthyl-6 pyrimidinyle-4) (DIAZINON) | 37,0 |
| Bis dithiophosphate de O,O,O',O'-tétra éthyle et S,S'-méthanediyle (ETHION) | 37,5 |
| Thiophosphate de O,O-diéthyle et O-(nitro-4 phényle (PARATHION) | 43,0 |

On peut, en outre, citer les matières insecticides suivantes: Acétophos, Chlorpyrifos, Chlorpyrifos-méthyl, Chlorthion, Crotoxyphos, Endothion, Iodofenphos, Méthylacétophos, Méthyléthyl-parathion, Phosalone, Phosdrine, Phosphamidon, Phtalophos, Formothion, Méthidathion.

Dans les formulations selon l'invention qui ont donné des résultats très satisfaisants se trouvent celles qui contiennent comme insecticide (A) le malathion, le diazinon, le diméthoate, le fénitrothion, le fenchlorphos, le parathion-éthyl et le parathion-méthyl.

Préférablement, la quantité d'insecticide (A) présente dans les formulations selon l'invention et en particulier dans les formulations satisfaisantes mentionnées ci-dessus, est comprise entre 0,2 et 1 partie pour cent parties de formulation.

La quantité d'hydrocarbure (B) présent est préférablement comprise entre 1 et 5 parties pour cent parties en poids de formulation. De préférence aussi, la quantité d'hydrocarbure (B) est au moins égale à 80 parties pour cent parties en poids de l'insecticide (A), et en particulier du malathion, et elle est préférablement comprise entre 1 et 25 parties pour une partie en poids de malathion ou d'un autre ester phosphorique insecticide souffrant d'une instabilité en milieu aqueux, comme définie ci-dessus.

Lorsque le constituant hydrocarbure (B) comprend un ou des hydrocarbures saturés, il est préférable qu'un ou plusieurs de ceux-ci peuvent être solides à la condition que le mélange constituant (B) soit liquide et que lesdits hydrocarbures solides aient un point d'ébullition, sous 1 bar, n'excédant pas 250°C. Cette limite de température exclut pratiquement les hydrocarbures saturés ayant plus de 14 à 15 atomes de carbone et donc la quasi totalité des hydrocarbures solides.

Les composés aromatiques et alkylaromatiques convenant pour réaliser le constituant hydrocarbure (B) dans le système selon l'invention, utilisés seuls ou en mélange avec un hydrocarbure saturé, sont choisis, par exemple, parmi les suivants: toluène, éthylbenzène, orthoxylène, métaxylène, paraxylène, isopropylbenzène, triméthyl-1,3,5 benzène, biphényle, méthyl-1 naphtalène, tétraline, cymène, pseudocumène, di-isopropyl-1,4 benzène, méthyl-1 tétraline, méthyl-2 tétraline et leurs mélanges.

Les hydrocarbures saturés pouvant se trouver en mélange avec les hydrocarbures aromatiques ou alkylaromatiques sont choisis, par exemple, parmi les suivants: méthyl-2 heptane, octane, éthyl-cyclohexane, nonane, isopropylcyclohexane, décane, undécane, dodécane, décaline, diméthyl-1,2 cyclohexane, diméthyl-1,3 cyclohexane, diméthyl-1,4 cyclohexane, méthyl-2 octane, méthyl-2 nonane et leurs mélanges.

Peuvent également convenir les mélanges d'hydrocarbures aromatiques en vente sur le marché et leurs mélanges avec les hydrocarbures saturés. Tels sont, par exemple, les suivants dans lesquels les taux d'hydrocarbures aromatiques sont indiqués entre parenthèses: Panasol RX—5 (70%), RX—21 (99%), RX—22 (94%) et RX—34 (100%), Amsco LEP Solvent (18,5%), Amsco mineral spirit (17%), Amsco 140 Solvent (17%), Amsco 460 Solvent (18%), Laktane Esso (21,5%) Varsol 1 Esso (18%), Varsol 2 Esso (31,5%), Varsol 3 Esso (15%), Solvesso 100 (99%), Solvesso 150 (97%), Tolu-Sol 19 Shell (25%), Tolu-Sol 25 Shell (25%), Tolu-Sol 28 Shell (28%), Tolu-Sol 40 Shell (39%), Tolu-Sol 45 Shell (45%), Cyclo-Sol 43 Shell (99%), TS—28 R Shell (73%), TS—28 Shell (75%), Cyclo-Sol 53 Shell (99,5%), Cyclo-Sol 63 Shell (99,5%), Mineral Spirits 105 Shell (28%), Mineral Spirits 110 Shell (27%), Nona-Sol 120 Shell (20%) (voir Industrial Solvents Handbook de I. Mellan, Noyes Data Corporation, 1970, pages 3 à 26).

L'agent tensio-actif (C) est préférablement utilisé dans une proportion comprise de préférence entre 0,15 et 1 partie et, mieux encore, entre 0,2 et 0,5 partie pour cent parties de formulation. Avantageusement cet agent tensio-actif est présent à raison de 4 à 40 parties pour cent parties du mélange (A) + (B) (malathion + hydrocarbure).

L'agent tensio-actif est préférablement constitué par un mélange de deux composés, l'un pouvant être choisi, par exemple, parmi les alkylarylsulfonates métalliques hydrosolubles, l'autre pouvant être choisi, par exemple, parmi les produits de condensation de l'oxyde d'éthylène ou de propylène sur les alkylphénols, sur les alcools gras ou sur les huiles végétales, le terme "alkyl" désignant ici tout reste hydrocarboné saturé en chaîne droite ou diversement ramifiée et comprenant 3 à 15 atomes de carbone.

Comme alkylarylsulfonates, sont avantageusement utilisés, par exemple, les disulfonates de sodium ou de calcium, choisis parmi ceux du mono- et di-propyl, -butyl, -hexyl, -octyl, -nonyl, - décyl, -dodécyl et pentadécyl benzène, du naphtalène ou du biphényle.

Comme alkylphénols oxyéthylénés ou oxypropylénés, peuvent être utilisés dans les formulation selon l'invention par exemple, les butyl-, hexyl-, heptyl-, octyl-, nonyl-, décyl- et dodécyl-phénols condensés avec 3 à 20 molécules d'oxyde d'éthylène ou d'oxyde de propylène.

Comme alcools gras oxyéthylénés ou oxypropylénés, peuvent être utilisés dans ces formulations par exemple, les décanols, dodécanols, tétradécanols, hexadécanols et octadécanols condensés avec 5 à 15 molécules d'oxyde d'éthylène ou d'oxyde de propylène.

Comme huiles végétales oxyéthylénées, peuvent être utilisées, par exemple, les huiles de palme, d'arachide, de coco, de colza, de soja ou de ricin condensées avec 3 à 20 molécules d'oxyde d'éthylène.

L'eau utilisée pour la préparation des formulations du produit dans les système selon l'invention peut être une eau douce d'origine et dureté quelconques (rivière, source, pluie); on utilisera toutefois, de préférence, une eau peu dure ou, mieux encore, déminéralisée.

L'agent propulseur (D) préféré est le protoxyde d'azote utilisé en quantité convenable pour amener le produit, enfermé dans son emballage, à une pression comprise entre 3 et 7 bars.

La proportion de protoxyde d'azote dans les formulations est préférablement d'au moins un pour cent en poids du produit dans le système selon l'invention.

L'agent propulseur (D) est contenu préférablement en quantité d'environ une partie en poids, mais il peut être présent en quantité plus élevée, par exemple, de 5 à 20 parties pour cent parties en poids de formulation.

Les mélanges de protoxyde d'azote et de butane et/ou propane et/ou oxyde de diméthyle peuvent également être utilisés. De préférance, la quantité d'un tel mélange propulseur est comprise entre 5 et 20 parties pour cent parties en poids de la formulation, dont au moins la moitié est constitué par le protoxyde d'azote.

Les emballages (boîtiers) convenables pour contenir les formulations selon l'invention sont tous ceux connus dans la technologie des aérosols; ils sont, par exemple, en verre, en fer étamé, en aluminium nu ou en aluminium verni intérieurement et possèdent une valve à passage direct ou à prise additionnelle dont le débit est calculé en fonction de l'usage désiré.

Les systèmes aérosols selon l'invention présentent l'avantage de ne pas provoquer de tache sur les supports où vient se poser la pulvérisation, et en particulier sur les feuilles des végétaux, contrairement aux produits basés sur la technologie d'une suspension de particules solides.

Les formulations du produit pulvérisable dans le système selon l'invention peuvent aussi contenir un ou plusieurs des constituants facultatifs (F) suivants: substances insecticides de complément compatibles avec l'insecticide (A), substances acaricides, substances fongicides, huiles ayant un point d'ébullition, sous une pression d'un bar, supérieur à 250°C, solvants renforçateurs ayant un point d'ébullition supérieur à 80°C, parfums et tampons capables d'amener la formulation à un pH compris entre 5 et 7.

Les substances insecticides de complément convenables sont toutes celles, compatibles avec l'insecticide A, qui permettent de renforcer l'action insecticide de ce dernier et/ou de compléter son spectre insecticide; elles sont choisies parmi celles solubles dans l'eau ou dans l'hydrocarbure (B) auquel peut être additionné un solvant renforçateur (G). De telles substances sont, par exemple, choisies parmi les pyréthrinoïdes tels que les pyréthrines naturelles, alléthrine, bio-alléthrine, S-bioalléthrine, resméthrine, bioresméthrine, phénothrine, d-phénothrine, perméthrine, tétraméthrine, kadéthrine, décaméthrine et fenvalérate et/ou parmi les composés organochlorés tels que les hexachlorocyclohexanes, lindane, DDT, méthoxychlore, perthane, toxaphéne, chlordane, heptachlore, aldrine, dieldrine, isodrine et endrine; ou parmi les composés organophosphorés, autres que le malathion et les esters phosphoriques autres que ceux définis sous (A), tels que par exemple le chlorfenvinphos et la carbophénothion.

Les substances acaricides convenables sont toutes celles solubles dans l'eau ou dans le constituant hydrocarbure (B), facultativement additionnées d'un solvant renforçateur, comme par exemple, les chloropropylate, bromopropylate, chlorobenzilate, BCPE ou dicofol.

Les substances fongicides convenables sont toutes celles compatibles avec l'insecticide (a) et solubles dans l'eau ou dans le constituant hydrocarbure (B) facultativement additionnées d'un solvant renforçateur; comme par exemple, les chloranil, dichlone, dithianon, dinocap, captane, folpel, captafol, chlorothalonil, dodémorphe, dichlofluanide, chloropicrine, thiabendiazole, métalaxyl et isopropyl-1 (benzothiazolyl-2)-2 urée.

Les huiles convenables comme constituant facultatif dans les formulations selon l'invention sont choisies parmi celles acceptables pour la lutte contre les insectes des maisons. Les huiles acceptables pour l'usage phytosanitaire sont, de préférence, de huiles minérales paraffiniques contenant entre 70 et 100 pour cent en poids d'huile non-sulfonable par l'acide sulfurique. Les huiles acceptables pour la lutte contre les insectes des maisons sont les huiles minérales paraffiniques, les huiles végétales et enfin les esters lourds.

Comme esters lourds sus-mentionnés peuvent être utilisés, par exemple, les suivants:

(1) Les monoesters formés entre les alcanols et les acides alcanoïques ou alcénoïques comme, par exemple, les laurates, myristate, palmitate, stéarate, undécanoate et oléate d'éthyle, d'isopropyle, de butyle ou d'isobutyle.

(2) Les diesters formés entre les alcanols et les hydrocarbures dicarboxylés comme, par exemple, les adipates de dialkyle tels que l'adipate de dioctyle et l'adipate de dinonyle, les sébaçates de dialkyle tels que le sébaçate de dibutyle, le sébaçate de dipentyle et le sébaçate de dioctyle, les azélates de dialkyle tels que l'azélate de dioctyle, les phthalates de dialkyle tels que le phthalate de dibutyle, le phtalate de dioctyle et le phtalate de didécyle, le phtalate de bis(undécyle), le phtalate de bis(dodécyle), le phtalate de bis(tridécyle), le phtalate de bis(tétradécyle) et le phtalate de dicétyle,

(3) Les diesters formés entre les phénols, alkylsubstitués ou non substitués et les hydrocarbures dicarboxylés comme, par exemple, les phtalates de diaryle tels que le phtalate de diphényle et les phtalates de dicrésyle,

(4) Les diesters formés entre les cycloalcanols, alkyl substitués ou non substitués, et les hydrocarbures dicarboxylés comme, par exemple, le phtalate de dicyclohexyle et les phtalates de bis (méthylcyclohexyle),

(5) Les diesters formés entre les phénylalcanols et les hydrocarbures dicarboxylés comme, par exemple, le sébaçate de dibenzyle,

(6) Les diesters formés entre les alcanediols et les hydrocarbures monocarboxylés comme, par exemple, le di-isobutyrate de triméthyl-2,2,4 pentanediol-1,3,

(7) Les triesters formés entre les phénols, alkylsubstitués ou non substitués, et l'acide phosphorique comme, par exemple, le phosphate de triphényle, le phosphate de tris (terbutyl-4 phényle) et les phosphates de tricrésyle,

(8) Les triesters formés entre les alcanols et l'acide phosphorique comme, par exemple, le phosphate de trioctyle.

Les solvants renforçateurs sont destinés à augmenter les pouvoir solvant de l'hydrocarbure (B). Ils possèdent, préférablement, un point d'ébullition compris entre 110 et 250°C et peuvent être choisis, par exemple, dans les classes chimiques des hydrocarbures halogénés, des éthers-oxydes (ayant un poids moléculaire supérieur à 140) et des cétones.

Comme hydrocarbures halogénés convenables, peuvent être utilisés, par exemple, les chloro-1 octane, chloro-1 décane, chloro-1 dodécane, bromo-1 heptane, bromo-1 octane, dibromo-1,3 propane, dibromo-1,2 butane, tribromo-1,2,3 propane, hexachloroéthane, dichloro-1,2 benzène, bromo-2 toluène, bromo-4 toluène, dichloro-1,3 benzène et bromo-4 toluène.

Comme éthers-oxydes convenables peuvent être utilisés, par exemple, les phénètole, homophénètole, chloro-2-anisole, chloro-4 anisole, méthoxy-4 toluène, dioxa-3,6 octane, dioxa-4,7 nonane, dioxa-5,9 dodécane, vératrole, diméthoxy-1,3 benzène, diméthoxy-1,4 benzène, trioxa-2,5,8 nonane, trioxa-3,6,9 undécane, diméthyl-4,8 trioxa-3,6,9 tridécane, trioxa-5,8,11 pentadécane, triméthoxy-1,3,5 benzène, triméthoxy-1,2,3 benzène, tétraoxa-2,5,8,11 dodécane et pentaoxa-2,5,8,11,14 pentadécane.

Comme cétones convenables, peuvent être utilisés, par exemple, les heptanone-2, heptanone-3, octanone-2, nonanone-5, nonanone-3, diméthyl-2,6 heptanone-4, acétonylacétone, cyclohexanone, méthyl-2 cyclohexanone, méthyl-3 cyclohexanone, méthyl-4 cyclohexanone, isophorone, triméthyl-3,3,5 cyclohexanone, fenchone, bétathuyone, acétophénone, propiophénone, pivalophénone, isobutyrophénone, méthyl-4 acétophénone et méthoxy-4 acétophénone.

**0 006 212**

Le choix des agents tensio-actifs pour les formulations du produit dans le système selon l'invention est important. Ces formulations doivent constituer des émulsions du type huile dans l'eau avec une part d'huile constituée par l'hydrocarbure (B) relativement importante et une absence de solvant organique miscible à l'eau; ces caractéristiques n'apparaissent pas dans les formulations qui sont des solutions vraies et requièrent un équilibre différent et donc des tensio-actifs différents et des quantités différentes de ceux-ci.

D'une facon générale, la présence d'un solvant miscible à l'eau, comme l'acétone, le méthanol, l'éthanol, le méthylal etc. n'est pas souhaitable car il peut entraîner une partie de l'insecticide, en particulier, du malathion en solution dans l'eau et il peut en résulter une destruction partielle de celui-ci. Toutefois, cet entraînement en solution est toujours limité par la présence du constituant hydrocarbure (B), de même que la décomposition. Il n'y a donc pas nécessité d'éviter absolument la présence de tels solvants à condition que leur quantité ne réduise pas sérieusement la stabilité de l'émulsion.

La présence de la silice, n'est en rien gênante. On peut utiliser convenablement de l'aérosil (ou Cab-O-Sil).

Les parfums utilisables sont tous ceux compatibles avec les substances actives présentes dont, notamment, le malathion et les autres esters phosphoriques similaires.

L'utilisation d'un tampon n'est pas obligatoire; les tampons sont connus et peuvent être constitués d'un mélange comportant un sel et un acide ou une base solubles dans l'eau, comme, par exemple, les couples phtalate acide de potassium/soude ou potasse, phosphate disodique/acide citrique, phosphate monopotassique/soude ou potasse, acétate de sodium ou potassium/acide acétique, propionate de sodium ou potassium/acide propionique.

Un tampon composé de phtalate acide de potassium et soude comprendra, par exemple, une proportion comprise entre 84,4 et 91,5 pour cent en poids de sel sec et le complément à cent pour cent en poids de soude sèche; on obtiendra, notamment, ainsi les tampons suivants:

pH 5,0 : 91,45% de phtalate et  8,55% de soude

pH 5,2 : 89,49% de phtalate et 10,51% de soude

pH 5,4 : 87,82% de phtalate et 12,18% de soude

pH 5,6 : 86,48% de phtalate et 13,52% de soude

pH 5,8 : 85,57% de phtalate et 14,43% de soude

pH 6,0 : 84,87% de phtalate et 15,13% de soude

pH 6,2 : 84,44% de phtalate et 15,56% de soude.

Un tampon composé de phosphate monopotassium et de soude comprendra, par exemple, une proportion comprise entre 85 et 98 pour cent en poids de sel sec et le complément à cent en poids de soude sèche; on obtiendra, notamment, ainsi les tampons suivants:

pH 5,8 : 97,86% de phosphate et  2,14% de soude

pH 6,0 : 96,76% de phosphate et  3,24% de soude

pH 6,2 : 95,18% de phosphate et  4,82% de soude

pH 6,4 : 93,10% de phosphate et  6,90% de soude

pH 6,6 : 90,52% de phosphate et  9,48% de soude

pH 6,8 : 87,78% de phosphate et 12,22% de soude

pH 7,0 : 85,16% de phosphate et 14,84% de soude.

Un tampon composé de phosphate disodique et d'acide citrique comprendra, par exemple, une proportion comprise entre 64 et 89 pour cent en poids de sel et son complément à cent en poids d'acide citrique monohydraté; on obtiendra, notamment, ainsi les tampons suivants:

pH 5,0 : 64,27% de phosphate et 35,73% d'acide citrique

pH 5,2 : 66,15% de phosphate et 33,85% d'acide citrique

7

pH 5,4 : 68,10% de phosphate et 31,90% d'acide citrique

pH 5,6 : 70,84% de phosphate et 29,16% d'acide citrique

pH 5,8 : 72,15% de phosphate et 27,85% d'acide citrique

pH 6,0 : 74,34% de phosphate et 25,66% d'acide citrique

pH 6,2 : 76,80% de phosphate et 23,20% d'acide citrique

pH 6,4 : 79,26% de phosphate et 20,74% d'acide citrique

pH 6,6 : 81,96% de phosphate et 18,04% d'acide citrique

pH 6,8 : 85,27% de phosphate et 14,73% d'acide citrique

pH 7,0 : 88,79% de phosphate et 11,21% d'acide citrique.

Les tampons préférés sont ceux qui permettent d'obtenir un pH compris entre 5 et 5,5. Parmi ceux-ci les mélanges comprenant l'acide acétique et l'acétate de sodium sont les plus appréciés. De tels tampons sont par exemple les suivants:

pH 5,10 : 77,1% d'acétate (*) et 22,9% d'acide acétique

pH 5,15 : 80,7% d'acétate (*) et 19,3% d'acide acétique

pH 5,20 : 84,2% d'acétate (*) et 15,7% d'acide acétique

pH 5,25 : 87,8% d'acétate (*) et 12,2% d'acide acétique

pH 5,30 : 91,3% d'acétate (*) et  8,7% d'acide acétique.

(*) sel cristallisé avec 3 molécules d'eau par molécule d'acétate de sodium

Le tampon est préférablement utilisé à une teneur comprise entre 0,2 et 2 parties pour cent parties en poids de formulation.

L'intérêt des formulations selon l'invention est illustré par les expérimentations qui suivent (toutes les valeurs sont exprimées en pourcentages en poids):

*Experimentation I:* On a préparé les quatre formulations I—1, I—2, I—3 et I—4, cette dernière étant conforme à l'invention et les trois autres appartenant à l'art connu. Chacune des quatre formulations contient 1% en poids de protoxyde d'azote comme agent propulseur.

|  | I—1 | I—2 | I—3 | I—4 |
|---|---|---|---|---|
| Malathion | 0,05 | 0,10 | 0,05 | 0,10 |
| Xylène (a) | – | – | – | 1,50 |
| Tensio-actif $C_1$ (b) | – | – | – | 0,02 |
| Tensio-actif $C_2$ (c) | – | – | – | 0,04 |
| Tensio-actif $C_3$ (d) | 1,50 | 1,50 | 1,50 | – |
| Tensio-actif $C_4$ (e) | 1,50 | 1,50 | 1,50 | – |
| Ethanol | 9,50 | – | – | – |
| Méthylal | – | 9,50 | 10,00 | – |
| Silice ultrafine | – | – | 2,50 | – |
| Eau déminéralisée | 86,45 | 86,40 | 83,45 | 97,34 |

(a) produit industriel contenant, en mélange, les trois isomères ortho, méta et para à côté d'une petite quantité d'éthylbenzène
(b) nonylphénol condensé avec 12 moles d'oxyde d'éthylène.
(c) dodécylbenzène-sulfonate de calcium.
(d) octylphénol condensé avec 14 moles d'oxyde d'éthylène.
(e) huile de ricin condensé avec 18 moles d'oxyde d'éthylène.

Chacune de ces formulations a été mise dans un flacon de verre résistant à la pression et du protoxyde d'azote a été introduit dans chaque flacon jusqu'à obtention et maintien d'une pression de 5 bars. La proportion finale du propulseur dans la formulation complète était voisine d'un pour cent en poids. Les flacons ont été stockés pendant 15 jours à la température de 50°C, la formulation I—4 étant agitée pendant quelques minutes chaque jour pour maintenir la suspension.

Au bout de 15 jours, le teneur en malathion présente dans chaque flacon a été mesurée par chromatographie en phase gazeuse. Le tableau ci-dessous indique le pourcentage de décomposition noté dans chaque cas.

| I—1 | I—2 | I—3 | I—4 |
|---|---|---|---|
| 55 % | 35 % | 50 % | 0 % |

On voit que la formulation selon l'invention n'a subi aucune décomposition alors que celle-ci atteint 35 à 55% dans les autres cas.

*Experimentation II:* On a opéré comme dans l'expérimentation I en utilisant les formulations suivantes contenant en plus 1% en poids de protoxyde d'azote:

|  | II—1 | II—2 |
|---|---|---|
| Malathion | 0,35 | 0,35 |
| Lindane | 0,12 | — |
| Roténone | — | 0,20 |
| Xylène (a) | 1,33 | 1,65 |

|  | II—1 | II—2 |
|---|---|---|
| Acétophénone | — | 1,00 |
| Tensio-actif C₁ (b) | 0,10 | 0,10 |
| Tensio-actif C₂ (c) | 0,10 | 0,10 |
| Tampon pH 5,15 (f) | 0,30 | 0,30 |
| Eau de rivière | 96,70 | 95,30 |

(f) Mélange constitué par 80,7% d'acétate de sodium trihydraté et 19,3% d'acide acétique.

La présence de Roténone dans la formulation II—2 a nécessité une quantité de xylène plus grande qu'en II—1 et la présence d'un solvant renforçateur (acétophénone) car cette matière complémentaire est peu soluble dans le xylène.

Après mise en flacons on a ajouté du protoxyde d'azote jusqu'à obtention et maintien d'une pression de 5 bars puis on a stocké à une température de 40°C et à la température ambiante pendant six mois, les flacons étant agités énergiquement une fois par mois.

Au bout de ce temps l'analyse a montré que la quantité du malathion décomposé était inférieure à 5% à la température ambiante et à 10% à 40°C.

*Experimentation III:* On a préparé la formulation suivante contenant en plus 1% en poids de protoxyde d'azote:

| Malathion | 0,35 |
|---|---|
| Lindane | 0,12 |
| Dinocap | 0,06 |
| Chlorothalonil | 0,14 |
| Xylène (a) | 2,07 |
| Tensio-actif C₁ (b) | 0,10 |
| Tensio-actif C₂ (c) | 0,10 |
| Tampon 5,15 (f) | 0,30 |
| Eau de rivière | 95,76 |

Cette formulation a été mise dans des boîtiers aérosols en aluminium revêtus intérieurement d'un vernis épikote et du protoxyde d'azote a été introduit jusqu'à obtention et maintien d'une pression de 6 bars.

Une partie des produits ainsi obtenus a été stockée à la température ambiante et une autre partie a été stockée à 40°C. Chaque mois, chaque boîtier était agité énergiquement pendant quelques minutes pour reconstituer la suspension.

Au bout de six mois l'analyse des substances actives présentes a été faite; il n'a été trouvé aucune décomposition tant pour les produits maintenus à 40°C, que pour ceux maintenus à la température ambiante.

Dans la formulation C, on a utilisé une quantité forte de xylène pour pouvoir dissoudre le chlorothalonil mais un solvant renforçateur n'est pas nécessaire.

*Experimentation IV:* On a opéré comme dans l'expérimentation III en utilisant la formulation suivante:

| Malathion | 0,35 |
|---|---|
| Lindane | 0,12 |
| Chlorothalonil | 0,14 |

10

| Isopropyl-1 (benzothiazolyl-2)-2 urée | 0,07 |
|---|---|
| Xylène (a) | 2,00 |
| Tensio-actif $C_1$ (b) | 0,02 |
| Tensio-actif $C_2$ (c) | 0,04 |
| Acétophénone | 1,86 |
| Tampon 5,30 (f') | 0,40 |
| Eau de rivière | 94,00 |

(f') Mélange constitué par 91,3% d'acétate de sodium trihydraté et 8,7% d'acide acétique.

Dans la formulation IV, l'addition d'isopropyl-1 (benzothiazolyl-2)-2 urée a nécessité une quantité importante de solvant renforçateur à cause de sa faible solubilité dans le xylène.

Cette formulation a été mise en boîtier aérosol en aluminium verni intérieurement et le protoxyde d'azote a été introduit jusqu'à obtention et maintien d'une pression de 6 bars.

Le stockage a été fait à la température ambiante pendant 7 mois; au bout de ce délai, l'analyse des substances actives présentes a montré qu'aucune décomposition n'était survenue à aucune d'entre elles.

Les résultats des expérimentations qui précèdent montrent que les substances actives présentes, notamment le malathion, dans les formulations conformes à l'invention sont parfaitement stables dans le temps malgré la présence d'une forte proportion d'eau.

*Experimentation V:* On a préparé les six formulations V—1 à V—6 suivantes en flacon verre sous une pression de 5 bars:

| | | V—1 | V—2 | V—3 | V—4 | V—5 | V—6 |
|---|---|---|---|---|---|---|---|
| A | Malathion | 0,05 | 0,50 | 1,20 | 3,00 | 0,60 | 1,00 |
| B | Benzène | — | 0,50 | — | — | — | — |
| | Toluène | — | — | — | 3,00 | — | — |
| | Orthoxylène | — | — | — | — | — | 10,00 |
| | Paraxylène | 0,20 | — | — | — | — | — |
| | Cymène | — | — | — | — | 1,00 | — |
| | Solvant naphta (a″) | — | — | 1,00 | — | — | — |
| | Dodécane | — | — | — | — | 4,00 | — |
| C | Tensio-actif $C_3$ (d) | 0,05 | — | — | — | — | — |
| | Tensio-actif $C_5$ (g) | — | 0,06 | 0,11 | 0,36 | — | — |
| | Tensio-actif $C_6$ (g') | — | — | 0,07 | — | — | — |
| | Tensio-actif $C_7$ (g″) | — | 0,04 | — | 0,24 | — | — |
| | Tensio-actif $C_1$ (b) | — | — | — | — | 0,10 | 0,20 |
| | Tensio-actif $C_2$ (c) | — | — | — | — | 0,10 | 0,20 |

# 0 006 212

|  |  | V—1 | V—2 | V—3 | V—4 | V—5 | V—6 |
|---|---|---|---|---|---|---|---|
| D | Anhydride carbonique | — | — | — | 1,25 | 1,15 | — |
|  | Protoxyde d'azote | 1,00 | 1,00 | 1,05 | — | — | 1,10 |
| E | Eau de rivière | 98,28 | 97,70 | 96,22 | 91,65 | 93,05 | 87,40 |
|  | Tampon 5,15 (f) | — | 0,20 | 0,35 | 0,50 | — | — |
|  | Tampon 5,20 (h) | — | — | — | — | — | 0,10 |
|  | Tampon 5,00 (h') | 0,10 | — | — | — | — | — |
|  | Huile·de paraffine (a''') | 0,30 | — | — | — | — | — |
|  | Cyclohexanone | 0,02 | — | — | — | — | — |

(a'') Coupe de solvants arcmatiques ayant un point d'ébullition étalé entre 144 et 170°C.
(a''') Huile contenant 85% en poids de produit non sulfonable par l'acide sulfurique.
(g) Ditertiobutylbenzène-sulfonate de calcium.
(g') Nonylphénol condensé avec 15 moles d'oxyde d'éthylène.
(g'') Huile de ricin condensée avec 14 moles d'oxyde d'éthylène.
(h) Mélange constitué par 66,15% de phosphate disodique et 33,85% d'acide citrique nonohydraté.
(h') Mélange constitué par 91,45% de phtalate acide de potassium et 8,55% d'hydroxyde de sodium.

Ces formulations ont été stockées pendant 3 mois à la température de 30°C, avec une agitation pendant quelques minutes chaque semaine pour maintenir la suspension, puis la teneur en malathion a été déterminée dans chaque formulation par chromatographie en phase gazeuse. Dans aucun cas il n'a été noté de décomposition.

On voit que la nature de l'hydrocarbure (B) et ses proportions, de même que les quantités de malathion et de même que la nature et les proportions de l'agent tensio-actif, peuvent varier profondément sans affecter les résultats de l'invention.

*Experimentation VI:* On a préparé les deux formulations VI—1 et VI—2 suivantes en boîtier pour aérosol, en aluminium verni intérieurement, sous une pression de 5 bars.

La formulation VI—1 était conforme à l'art connu cependant que la formulation VI—2 était réalisée selon l'invention.

12

|  | VI—1 | VI—2 |
|---|---|---|
| Malathion | 0,35 | 0,35 |
| Lindane | 0,12 | 0,12 |
| Dinocap | 0,20 | 0,20 |
| Acide acétique | 0,06 | 0,06 |
| Acétate sodique, 2 aq. | 0,25 | 0,25 |
| Silice ultrafine (a') | 2,00 | — |
| Méthylal | 10,00 | — |
| Tensio-actif $C_3$ (d) | 1,50 | — |
| Tensio-actif $C_4$ (e) | 1,50 | — |
| Tensio-actif $C_1$ (b) | — | 0,02 |
| Tensio-actif $C_2$ (c) | — | 0,04 |
| Xylène | — | 1,50 |
| Eau déminéralisée | 84,02 | 97,46 |

(a') Oxyde de silicium obtenu par le procédé dit de flamme et commercialisé par la firme allemande DEGUSSA sous la marque "Aérosil 200".

Ces deux formulations ont été stockées pendant 4 semaines à la température de 40°C, avec une agitation pendant quelques minutes tous les deux jours pour maintenir la suspension, puis la teneur en chacune des substances actives a été déterminée. On a opéré par chromatographie en phase gazeuse pour le malathion et le lindane et par chromatographie sur couche mince pour le dinocap.

Les pourcentages de décomposition notés sont résumés dans le tableau ci-après:

|  | VI—1 | VI—2 |
|---|---|---|
| Malathion | 94 % | 0 % |
| Lindane | 63 % | 0 % |
| Dinocap | 100 % | 0 % |

Les résultats de cette expérimentation montrent que la décomposition peut être très grande dans les formulations conformes à l'art connu non seulement pour le malathion mais aussi pour les autres substances actives l'accompagnant et que la solution présentée par l'invention remédie totalement à cet inconvénient.

*Expérimentation VII:* On a préparé la formulation VII suivante, conforme à l'invention, dans un emballage pour aérosol en aluminium nu:

| Diazinon | : | 1,0 |
|---|---|---|
| Xylène (a) | : | 3,0 |
| Tensio-actif $C_1$ (b) | : | 0,4 |

# 0 006 212

| | | |
|---|---|---|
| Tensio-actif $C_2$ (c) | : | 0,4 |
| Tampon pH 5,15 (f) | : | 0,3 |
| Eau de rivière | : | 93,9 |
| Protoxyde d'azote | : | 1,0 |

(a) Produit industriel contenant, en mélange, les trois isomères ortho, méta et para du xylène à côte d'une petite quantité d'éthylbenzène.
(b) Nonylphénol condensé avec 12 moles d'oxyde d'éthylène.
(c) Dodécylbenzène-sulfonate de calcium.
(f) Mélange constitué par 80,7% d'acétate de sodium trihydraté et 19,3% d'acide acétique.

Cette formulation a été stockée pendant 3 mois à une température de 40°C avec agitation énergique une fois par semaine.
Au bout de ce délai, la teneur en diazinon a été mesurée par chromatographie sur couche mince. Aucune décomposition de cette substance n'a été décelée.

*Expérimentation VIII:* On a opéré comme dans l'expérimentation VII en utilisant les formulations VIII—1 et VIII—2 suivantes:

| | VIII—1 | VIII—2 |
|---|---|---|
| Parathion-méthyl | 0,6 | 0,6 |
| Paraxylène | 1,8 | — |
| Tensio-actif $C_1$ (b) | 0,25 | — |
| Tensio-actif $C_2$ (c) | 0,25 | — |
| Tensio-actif $C_3$ (d) | — | 2,4 |
| Tensio-actif $C_4$ (e) | — | 2,4 |
| Méthylal | — | 11,4 |
| Tampon pH 5,20 (i) | 0,4 | — |
| Eau de rivière | 95,7 | 82,2 |
| Protoxyde d'azote | 1,0 | 1,0 |

(d) Octylphénol condensé avec 14 moles d'oxyde d'éthylène.
(e) Huile de ricin condensée avec 18 moles d'oxyde d'éthylène.
(i) Mélange constitué par 84,2% d'acétate de sodium trihydraté et 15,7% d'acide acétique.

Ces formulations ont été stockées pendant 3 mois à une température de 40°C avec agitation énergique une fois par semaine.
Au bout de ce délai, la teneur en parathion-méthyl a été mesurée par chromatographie sur couche mince et les décompositions suivantes ont été notées:

| VIII—1 | VIII—2 |
|---|---|
| 20 % | 90 % |

On voit que la décomposition est beaucoup plus forte dans le cas de la formulation conforme à l'art connu que dans le cas de la formulation suivant l'invention.

*Expérimentation IX:* On a opéré comme dans l'expérimentation VII en utilisant les formulations IX—1 et IX—2 suivantes:

14

|  | IX—1 | IX—2 |
|---|---|---|
| Fénitrothion | 0,5 | 0,5 |
| Xylène (a) | 1,5 | — |
| Tensio-actif $C_1$ (b) | 0,2 | — |
| Tensio-actif $C_2$ (c) | 0,2 | — |
| Tensio-actif $C_3$ (d) | — | 2,0 |
| Tensio-actif $C_4$ (e) | — | 2,0 |
| Méthylal | — | 9,5 |
| Tampon pH 5,30 (j) | 0,3 | — |
| Eau de rivière | 96,3 | 85,0 |
| Protoxyde d'azote | 1,0 | 1,0 |

(j) Mélange constitué par 91,3% d'acétate de sodium trihydraté et 8,7% d'acide acétique.

Ces formulations ont été stockées pendant 3 mois à une température de 40°C avec agitation énergique une fois par semaine.

Au bout de ce délai, la teneur en fénitrothion a été mesurée par chromatographie sur couche mince et les décompositions suivantes ont été notées:

| IX—1 | IX—2 |
|---|---|
| 15 % | 70 % |

On voit que la décomposition est beaucoup plus forte dans le cas de la formulation conforme à l'art connu que dans le cas de la formulation suivant l'invention.

*Expérimentation X:* On a opéré comme dans l'expérimentation VII en utilisant les formulations X—1 et X—2 suivantes:

|  | X—1 | X—2 |
|---|---|---|
| Fenchlorphos | 0,8 | 0,8 |
| Orthoxylène | 2,0 | — |
| Tensio-actif $C_1$ (b) | 0,3 | — |
| Tensio-actif $C_2$ (c) | 0,3 | — |
| Tensio-actif $C_3$ (d) | — | 3,0 |
| Tensio-actif $C_4$ (e) | — | 3,0 |
| Méthylal | — | 15,2 |
| Tampon pH 5,20 (i) | 0,3 | — |
| Eau de rivière | 95,3 | 77,0 |
| Protoxyde d'azote | 1,0 | 1,0 |

Ces formulations ont été stockées pendant 6 mois à une température de 40°C avec agitation énergique une fois par semaine.

Au bout de ce délai, la teneur en fenchlorphos a été mesurée par chromatographie sur couche mince et les décompositions suivantes ont été notées:

| X—1 | X—2 |
|---|---|
| 0 % | 92 % |

On voit que la formulation selon l'invention n'a subi aucune décomposition alors que cette décomposition atteint 92% dans le cas de la formulation selon l'art connu.

*Expérimentation XI:* On a préparé la formulation XI—1 suivante, conforme à l'expérimentation VII et la formulation XI—2 suivante, correspondant à l'art connu (GB—PS 952 004)) dans des emballages pour aérosol en fer blanc:

| | XI—1 | XI—2 |
|---|---|---|
| Diazinon | 0,5 | 0,5 |
| Chloropropylate | 0,6 | 0,6 |
| Xylène (a) | 1,3 | 7,3 |
| Tensio actif $C_1$ (b) | 0,2 | — |
| Tensio actif $C_2$ (c) | 0,2 | — |
| Mono-oléate de sorbitan | — | 0,5 |
| Tensio actif $C_8$ (k) | — | 0,1 |
| Tampon pH 7 (k') | 4,3 | 4,3 |
| Nitrite d'aminopropanol | 0,2 | 0,2 |
| Protoxyde d'azote | 1,0 | — |
| Butane | — | 36,0 |
| Eau déminéralisée | 91,7 | 50,5 |

(k) Nonylphénol condensé avec 5 moles d'oxyde d'éthylène.
(k') Mélange constitué par 85,16% de phosphate monopotassique et 14,84% d'hydroxyde de sodium.

Ces formulations ont été stockées pendant 6 semaines à une température de 40°C avec agitation énergique une fois par semaine.
Au bout de ce délai, la teneur en diazinon a été mesurée par chromatographie sur couche mince.
Aucune décomposition n'a été décelée dans le cas de la formulation XI—1 conforme à l'invention alors que la décomposition atteignait 15% dans le cas de la formulation XI—2 correspondant à l'art connu.

*Expérimentation XII:* On a opéré comme dans l'expérimentation XI en utilisant la formulation XII—1 suivante, conforme à l'invention, et la formulation XII—2, correspondant à l'art connu:

| | XII—1 | XII—2 |
|---|---|---|
| Fénitrothion | 0,5 | 0,5 |
| Xylène (a) | 1,3 | — |
| Isopropanol | — | 9,5 |

**0 006 212**

|  | XII—1 | XII—2 |
|---|---|---|
| Tensio-actif $C_1$ (b) | 0,2 | — |
| Tensio-actif $C_2$ (c) | 0,2 | — |
| Tampon pH 5,30 (f') | 0,3 | 0,3 |
| Nitrite d'aminopropanol | 0,2 | 0,2 |
| Protoxyde d'azote | 1,0 | — |
| Oxyde de diméthyle | — | 35,0 |
| Eau déminéralisée | 96,3 | 54,5 |

Après 6 semaines de stockage à 40°C avec agitation hebdomadaire, l'analyse n'a permis de noter aucune décomposition dans le cas de la formulation XII—1 conforme à l'invention alors que la décomposition du fénitrothion atteignait 50% dans le cas de la formulation XII—2 correspondant à l'art connu.

*Expérimentation XIII:* On a opéré comme dans l'expérimentation XI en utilisant la formulation XIII—1 suivante, conforme à l'invention, et la formulation XIII—2 correspondant à l'art connu:

|  | XIII—1 | XIII—2 |
|---|---|---|
| Méthidathion | 0,3 | 0,3 |
| Xylène (a) | 1,3 | — |
| Isopropanol | — | 9,7 |
| Tensio actif $C_1$ (b) | 0,2 | — |
| Tensio actif $C_2$ (c) | 0,2 | — |
| Tampon pH 5,30 (f') | 0,3 | 0,3 |
| Nitrite d'aminopropanol | 0,2 | 0,2 |
| Protoxyde d'azote | 1,0 | — |
| Oxyde de diméthyle | — | 35,0 |
| Eau déminéralisée | 96,5 | 54,5 |

Après 6 semaines de stockage à 20°C avec agitation hebdomadaire, l'analyse n'a permis de noter aucune décomposition dans le case de la formulation XIII—1 conforme à l'invention alors que la décomposition du méthidathion était de 15% dans le cas de la formulation XIII—2 correspondant à l'art connu.

*Expérimentation XIV:* On a opéré comme dans l'expérimentation X en utilisant la formulation XIV—1 suivante, conforme à l'invention et les formulations XIV—2 et XIV—3 correspondant à l'art connu (XIV—3 avec propulseur butane correspondent à la technologie décrite dans le brevet COOPER, GB 952 004):

|  | XIV—1 | XIV—2 | XIV—3 |
|---|---|---|---|
| Formothion | 0,8 | 0,8 | 0,8 |
| Xylène (a) | 1,7 | — | 10,0 |
| Isopropanol | — | 9,2 | — |
| Tensio actif $C_1$ (b) | 0,2 | — | — |

17

**0 006 212**

|  | XVI—1 | XIV—2 | XIV—3 |
|---|---|---|---|
| Tensio actif $C_2$ (c) | 0,2 | — | — |
| Monooléate de sorbitan | — | — | 0,5 |
| Tensio actif $C_8$ (k) | — | — | 0,1 |
| Tampon pH 5,30 (f') | 0,3 | 0,3 | 0,3 |
| Nitrite d'aminopropanol | 0,2 | 0,2 | 0,2 |
| Protoxyde d'azote | 1,0 | — | — |
| Oxyde de diméthyle | — | 35,0 | — |
| Butane | — | — | 36,0 |
| Eau déminéralisée | 95,6 | 54,5 | 52,1 |

Après 6 semaines de stockage à 20°C avec agitation hebdomadaire, l'analyse effectuée par chromatographie sur couche mince a donné les pourcentages ci-après de décomposition du formothion:

| XIV—1 | XIV—2 | XIV—3 |
|---|---|---|
| 10 | 60 | 90 |

*Expérimentation XV:* On a opéré comme dans l'expérimentation X en utilisant les formulations XV—1 à XV—4 suivantes conformes à l'invention

|  | XV—1 | XV—2 | XV—3 | XV—4 |
|---|---|---|---|---|
| Diazinon | 1,0 | — | — | — |
| Fenchlorphos | — | 0,8 | — | — |
| Fénitrothion | — | — | 0,4 | — |
| Malathion | — | — | — | 0,8 |
| Xylène (a) | 2,6 | 2,8 | 3,2 | 2,8 |
| Tensio actif $C_1$ (b) | 0,2 | 0,2 | 0,2 | 0,2 |
| Tensio actif $C_2$ (c) | 0,2 | 0,2 | 0,2 | 0,2 |
| Tampon pH 5,30 (f) | — | 0,3 | 0,3 | 0,3 |
| Anhydride carbonique | 2,3 | 2,3 | 2,3 | 2,3 |
| Eau déminéralisée | 93,7 | 93,4 | 93,4 | 93,4 |

Après 6 semaines de stockage à 40°C avec agitation hebdomadaire, les analyses effectuées par chromatographie sur couche mince ont montré qu'aucune des quatre formulations n'avait subi de décomposition.

**Revendications**

1. Système de pulvérisation en forme d'aérosol, comprenant un récipient sous pression; un produit pulvérisable sous forme d'aérosol destiné à la lutte contre les insectes et contenu dans ledit

18

# 0 006 212

récipient, et un dispositif de décharge du produit en quantités contrôlées, associé avec le récipient, caractérisé en ce que ledit produit comprend pour cent parties en poids de formulation:

(A) 0,05 à 3 parties en poids d'un insecticide organophosphoré solide ou liquide, insoluble ou peu soluble dans l'eau, et souffrant une décomposition en cas de stockage prolongé dans un milieu aqueux, ledit insecticide étant présent en quantité suffisante pour le contrôle des insectes;

(B) 0,2 à 10 parties en poids d'un constituant hydrocarbure, liquide à 20°, ayant un point d'ébullition compris entre 110 et 250°C, et comprenant au moins le dixième de son poids en composé de la série aromatique ou alkylaromatique,

(C) 0,1 à 1 partie en poids d'un agent tensio-actif, choisi parmi ceux capables de mettre le mélange (A) + (B) en emulsion dans l'eau,

(D) un agent propulseur principal choisi parmi les gaz comprimés solubles dans l'eau, avec ou sans agent propulseur additionnel choisi parmi le butane et le propane,

(E) de l'eau,

la quantité de solvant organique miscible à l'eau étant inférieure à celle qui rendrait instable l'émulsion "huile dans l'eau" que le mélange (A) + (B) forme avec de l'eau.

2. Système de pulvérisation selon la revendication 1, caractérisé en ce que ledit produit comprend, pour cent parties en poids de formulation, 0,15 à 1 partie dudit agent tensio-actif (C).

3. Système selon l'une quelconque des revendications 1 et 2, caractérisé en ce que l'agent propulseur est contenu en quantité d'au moins une à 40 parties pour cent parties en poids de formulation.

4. Système selon l'une quelconque des revendications 1 et 2, caractérisé en ce que l'agent propulseur est un mélange de protoxyde d'azote et de butane et/ou propane et/ou oxyde de diméthyle, dont entre 5 et 20 parties sont présents dans cent parties en poids de la formulation.

5. Système selon l'une quelconque des revendications 1 à 4, caractérisé en ce que ledit produit comprend un ou plusieurs constituants facultatifs (F) choisis parmi les substances insecticides de complément, compatibles avec l'insecticide (A), les substances acaricides, les substances fongicides, les huiles ayant un point d'ébullition, sous une pression d'un bar, supérieur à 250°C, les solvants renforçateurs ayant un point d'ébullition supérieur à 80°C, les parfums et les tampons capables d'amener la formulation à un pH compris entre 5 et 7.

6. Système selon la revendication 5, caractérisé en ce que ledit système comprend (F) au moins une substance insecticide de complément compatible avec l'insecticide (A) qui permet de renforcer l'action insecticide de ce dernier et/ou de compléter son spectre insecticide, et qui est soluble dans l'eau ou dans l'hydrocarbure (B) sans ou avec solvant renforçateur (G).

7. Système selon la revendication 6, caractérisé en ce qu'il comprend au moins un solvant renforçateur ayant un point d'ébullition compris entre 110 et 250°C.

8. Système selon la revendication 7, caractérisé en ce que ledit solvant renforçateur est choisi parmi:

(1) les hydrocarbures halogénés, en particulier les chloro-1 octane, chloro-1 décane, chloro-1 dodécane, bromo-1 heptane, bromo-1 octane, dibromo-1,3 propane, dibromo-1,2 butane, tribromo-1,2,3 propane, hexachloroéthane, dichloro-1,2 benzène, bromo-2 toluène, bromo-4 toluène, dichloro-1,3 benzène, bromo-4 toluène;

(2) les éthers-oxydes, en particulier, les phénètole, homophénètole, chloro-2 anisole, chloro-4 anisole, méthoxy-4 toluène, dioxa-3,6 octane, dioxa-4,7 nonane, dioxa-5,9 dodécane, vératrole, diméthoxy-1,3 benzène, diméthoxy-1,4 benzène trioxa-2,5,8 nonane, trioxa-3,6,9 undécane, diméthyl 1-4,8 trioxa-3,6,9 tridécane, trioxa-5,8,11 pentadécane, triméthoxy-1,3,5 benzène, triméthoxy-1,2,3 benzène, tétraoxa-2,5,8,11 dodécane, pentaoxa-2,5,8,11,14 pentadécane; et

(3) les cétones, en particulier les heptanone-2, heptanone-3, octanone-2, nonanone-5, nonanone-3, diméthyl-2,6 heptanone-4, acétonyl-acétone, cyclohexanone, méthyl-2 cyclohexanone, méthyl-3 cyclohexanone, méthyl-4 cyclohexanone, isophorone, triméthyl-3,3,5 cyclohexanone, fenchone, bétathuyone, acétophénone, propiophénone, pivalophénone, isobutyrophénone, méthyl-4 acétophénone, méthoxy-4 acétophénone.

9. Système selon la revendication 8, caractérisé en ce que l'étheroxyde choisi comme solvant renforçateur a un poids moléculaire supérieur à 140.

10. Système selon la revendication 6, caractérisé en ce que ladite substance insecticide de complément est choisie parmi les pyréthrinoïdes tels que les pyréthrines naturelles, alléthrine, bioalléthrine, S-bioalléthrine, resméthrine, bioresméthrine, phénothrine, d-phénotrine, perméthrine, tétraméthrine, kadéthrine, décaméthrine, fenvalérate ou parmi les composés organochlorés tels que les hexachlorocyclohexanes, lindane, DDT, méthoxychlore, perthane, toxaphéne, chlordane, heptachlore, aldrine, dieldrine, isodrine, et endrine.

11. Système selon l'une quelconque des revendications 5 à 10, caractérisé en ce qu'au moins un des constituants facultatifs est un acaricide choisi parmi les chloropropylate, bromopropylate, chlorobenzilate, BCPE et dicofol.

12. Système selon l'une quelconque des revendications 4 à 11, caractérisé en ce qu'au moins un des constituants facultatifs est un fongicide.

13. Système selon la revendication 12, caractérisé en ce que le fongicide est choisi parmi les

19

chloranil, dichlone, dithianon, dinocap, captane, folpel, captafol, chlorothalonil, dodémorphe, dichlofluanide, chloropicrine, thiabenzazole et isopropyl-1 (benzothiazolyl-2)-2 urée.

14. Système selon l'une quelconque des revendications 4 à 13, caractérisé en ce qu'au moins un des constituants facultatifs est une huile ayant un point d'ébullition, sous une pression d'un bar, supérieur à 250°C, et choisie parmi

    (a) les huiles acceptables pour l'usage phytosanitaire, et

    (b) les huiles acceptables pour la lutte contre les insectes des maisons.

15. Système selon la revendication 14, caractérisé en ce que ladite huile est une huile acceptable pour l'usage phytosanitaire qui est choisi parmi les huiles minérales paraffiniques contenant au dessus de 70 et jusqu'à 100 pour cent en poids d'huile non sulfonable par l'acide sulfurique.

16. Système selon la revendication 14, caractérisé en ce que ladite huile est une huile acceptable pour la lutte contre les insectes des maisons et choisi parmi (i) les huiles minérales paraffiniques contenant entre 0 et 70 pour cent en poids d'huile non sulfonable par l'aide sulfurique;

    (ii) les huiles végétales, et

    (iii) les esters lourds se trouvant à 20°C, en état d'huile.

17. Système selon la revendication 16, caractérisé en ce que ladite huile contient au moins un desdits esters lourds choisi parmi

    (1) les monoesters formés entre les alcanols et les acides alcanoïques ou alcénoïques, en particulier, les laurates, myristates, palmitates, stéarates, undécanoates et oléates d'éthyle, d'isopropyle, de butyle et d'isobutyle.

    (2) les diesters formés entre les alcanols et les hydrocarbures dicarboxylés, en particulier les adipates de dialkyle tels que l'adipate de dioctyle et l'adipate de dinonyle, les sébaçates de dialkyle tels que le sébaçate de dibutyle, le sébaçate de dipentyle et le sébaçate de dioctyle, les azélates de dialkyle tels que l'azélate de dioctyle, les phtalates de dialkyle tels que le phtalate de dibutyle, le phtalate de dioctyle, le phtalate de didécyle, le phtalate de bis (undécyle), le phtalate de bis (dodécyle), le phtalate de bis (tridécyle), le phtalate de bis (tétradécyle) et le phtalate de dicétyle.

    (3) les diesters formés entre les phénols, alkylsubstitués ou non substitués et les hydrocarbures dicarboxylés, en particulier, les phtalates de diaryle tels que le phtalate de diphényle et les phtalates de dicrésyle;

    (3) les diesters formés entre les phénols, alkylsubstitués ou non substitués et les hydrocarbures dicarboxylés, en particulier, les phtalates de diaryle tels que le phtalate de diphényle et les phtalates de dicrésyle;

    (4) les diesters formés entre les cycloalcanols, alkyl substitués ou non substitués, et les hydrocarbures dicarboxylés, en particulier, le phtalate de dicyclohexyle et les phtalates de bis (méthylcyclohexyle);

    (5) les diesters formés entre les phénylalcanols et les hydrocarbures dicarboxylés, en particulier, le sébaçate de dibenzyle;

    (6) les diesters formés entre les alcanediols et les hydrocarbures monocarboxylés, en particulier le di-isobutyrate de triméthyl-2,2,4 pentanediol-1,3;

    (7) les triesters formés entre les phénols, alkylsubstitués ou non substitués, et l'acide phosphorique, en particulier le phosphate de triphényle, le phosphate de tris (terbutyl-4 phényle) et les phosphates de tricrésyle; et

    (8) les triesters formés entre les alcanols et l'acide phosphorique, en particulier le phosphate de trioctyle.

18. Système selon l'une quelconque des revendications 1 à 17, caractérisé en ce que ledit insecticide (A) a une durée de demi-vie comprise entre 5 et 50 heures lorsqu'il est maintenu à 70°C dans un mélange eau/éthanol (4:1 parties en volume) tamponné à pH 6.

**Patentansprüche**

1. Aerosolsprühsystem mit einem unter Druck stehenden Behälter, einem darin enthaltenen, als Aerosol versprühbaren Produkt zur Bekämpfung von Insekten und einer zum Behälter gehörigen Vorrichtung zur Abgabe des Produkts in gezielten Mengen, dadurch gekennzeichnet, dass dieses Produkt auf hundert Gewichtsteile Formulierung:

(A) 0,05 bis 3 Gewichtsteile eines festen oder flüssigen Organophosphorinsektizids, das in Wasser unlöslich oder schwerlöslich ist und bei längerer Lagerung in wässrigem Medium einer Zersetzung unterliegt, wobei dieses Insektizid in einer zur Insektenbekämpfung ausreichenden Menge vorliegt,

(B) 0,2 bis 10 Gewichtsteile eines Kohlenwasserstoffbestandteils, der bei 20°C flüssig ist, einen Siedepunkt zwischen 110 und 250°C besitzt und bei dem mindestens ein Zehntel seines Gewichts aus Verbindungen der aromatischen oder alkylaromatischen Reihe besteht,

(C) 0,1 bis 1 Gewichtsteile eines Tensids, das unter solchen ausgewählt ist, die dazu fähig sind, das Gemisch (A) + (B) in Wasser zu emulgieren,

(D) ein unter wasserlöslichen komprimierten Gasen ausgewähltes Haupttreibmittel, gegebenenfalls mit einem zusätzlichen, unter Butan und Propan ausgewählten Treibmittel, und

(E) Wasser,

enthält, wobei der Anteil an mit Wasser mischbarem organischen Lösungsmittel kleiner ist, als dasser die "Öl-in-Wasser"-Emulsion, die das Gemisch (A) + (B) mit Wasser bildet, unstabil machen würde.

2. Sprühsystem nach Anspruch 1, dadurch gekennzeichnet, dass dieses Produkt auf hundert Gewichtsteile Formulierung 0,15 bis 1 Gewichtsteil dieses Tensids (C) enthält.

3. System nach einem der Ansprüche 1 und 2, dadurch gekennzeichnet, dass das Treibmittel in einer Menge von mindestens eins bis 40 Teilen auf hundert Gewichtsteile Formulierung vorliegt.

4. System nach einem der Ansprüche 1 und 2, dadurch gekennzeichnet, dass das Treibmittel ein Gemisch aus Stickstoffmonoxyd und Butan und/oder Propan und/oder Dimethyläther ist, von dem 5 bis 20 Teile auf hundert Gewichtsteile Formulierung vorliegen.

5. System nach einem der Ansprüche 1 bis 4, dadurch gekennzeichnet, dass dieses Produkt einen oder mehrere fakultative Bestandteile (F) enthält, die unter komplementären, mit dem Insektizid (A) verträglichen Insektizidstoffen, Akarizidstoffen, Fungizidstoffen, Ölen mit einem Siedepunkt über 250°C bei 1 bar Druck, Hilfslösungsmitteln mit einem Siedepunkt über 80°C, Parfüms und Puffern, die den pH der Formulierung auf 5 bis 7 stellen können, ausgewählt sind.

6. System nach Anspruch 5, dadurch gekennzeichnet, dass dieses System (F) mindestens einen komplementären Insektizidstoff, der mit dem Insektizid (A) verträglich ist und es ermöglicht, die Insektizidwirkung des letzteren zu verstärken und/oder dessen Insektizidspektrum zu ergänzen, und in Wasser oder dem Kohlenwasserstoff (B) löslich ist, gegebenenfalls zusammen mit einem Hilfslösungsmittel (G) enthält.

7. System nach Anspruch 6, dadurch gekennzeichnet, dass es mindestens ein Hilfslösungsmittel mit einem Siedepunkt zwischen 110 und 250°C enthält.

8. System nach Anspruch 7, dadurch gekennzeichnet, dass dieses Hilfslösungsmittel unter:

(1) Halogenkohlenwasserstoffen, insbesondere 1-Chloroctan, 1-Chlordecan, 1-Chlordodecan, 1-Bromheptan, 1-Bromoctan, 1,3-Dibrompropan, 1,2-Dibrombutan, 1,2,3-Tribrompropan, Hexachloräthan, 1,2-Dichlorbenzol, 2-Bromtoluol, 4-Bromtoluol, 1,3-Dichlorbenzol und 4-Bromtoluol;

(2) Äthern, insbesondere Phenetol, Homophenetol, 2-Chloranisol, 4-Chloranisol, 4-Methoxytoluol, 3,6-Dioxaoctan, 4,7-Dioxanonan, 5,9-Dioxadodecan, Veratrol, 1,3-Dimethoxybenzol, 1,4-Dimethoxybenzol, 2,5,8-Trioxanonan, 3,6,9-Trioxaundecan, 1-4,8-Dimethyl-3,6,9-trioxatridecan, 5,8,11-Trioxapentadecan, 1,3,5-Trimethoxybenzol, 1,2,3-Trimethoxybenzol, 2,5,8,11-Tetraoxadodecan und 2,5,8,11,14-Pentaoxapentadecan; und

(3) Ketonen, insbesondere Heptanon-2, Heptanon-3, Octanon-2, Nonanon-5, Nonanon-3, 2,6-Dimethylheptanon-4, Acetonylaceton, Cyclohexanon, 2-Methylcyclohexanon, 3-Methylcyclohexanon, 4-Methylcyclohexanon, Isophoron, 3,3,5-Trimethylcyclohexanon, Fenchon, beta-Thujon, Acetophenon, Propiophenon, Pivalophenon, Isobutyrophenon, 4-Methylacetophenon und 4-Methoxyacetophenon ausgewählt wird.

9. System nach Anspruch 8, dadurch gekennzeichnet, dass der als Hilfslösungsmittel gewählte Äther ein Molekulargewicht über 140 besitzt.

10. System nach Anspruch 6, dadurch gekennzeichnet, dass dieser komplementäre Insektizidstoff unter Pyrethrinoiden, wie natürlichen Pyrethrinen, Allethrin, Bioallethrin, S-Bioallethrin, Resmethrin, Bioresmethrin, Phenothrin, d-Phenothrin, Permethrin, Tetramethrin, Kadethrin, Decamethrin und Fenvalerat, oder unter Organochlorverbindungen, wie Hexachlorcyclohexanen, Lindan, DDT, Methoxychlor, Perthan, Toxaphen, Chlordan, Heptachlor, Aldrin, Dieldrin, Isodrin und Endrin, ausgewählt wird.

11. System nach einem der Ansprüche 5 bis 10, dadurch gekennzeichnet, dass mindestens einer der fakultativen Bestandteile ein unter Chlorpropylat, Brompropylat, Chlorbenzilat, BCPE und Dicofol ausgewähltes Akarizid ist.

12. System nach einem der Ansprüche 4 bis 11, dadurch gekennzeichnet, dass mindestens einer der fakultativen Bestandteile ein Fungizid ist.

13. System nach Anspruch 12, dadurch gekennzeichnet, dass das Fungizid unter Chloranil, Dichlon, Dithianon, Dinocap, Captan, Folpet, Captafol, Chlorthalonil, Dodemorph, Dichlofluanid, Chlorpikrin, Thiabendazol und 1-Isopropyl-2-benzthiazolyl-(2)-harnstoff ausgewählt wird.

14. System nach einem der Ansprüche 4 bis 13, dadurch gekennzeichnet, dass mindestens einer der fakultativen Bestandteile ein Öl mit einem Siedepunkt über 250°C bei 1 bar Druck ist, das unter

(a) zur Verwendung bei der Pflanzenhygiene annehmbaren Ölen und

(b) zur Bekämpfung von Hausinsekten annehmbaren Ölen ausgewählt wird.

15. System nach Anspruch 14, dadurch gekennzeichnet, dass dieses Öl ein zur Verwendung bei der Pflanzenhygiene annehmbares Öl ist, das unter paraffinischen Mineralölen, die mehr als 70 und bis zu 100 Gewichtsprozent mit Schwefelsäure nicht sulfonierbares Öl enthalten, ausgewählt wird.

16. System nach Anspruch 14, dadurch gekennzeichnet, dass dieses Öl ein zur Bekämpfung von Hausinsekten annehmbares Öl ist, das unter

(i) paraffinischen Mineralölen, die zwischen 0 und 70 Gewichtsprozent mit Schwefelsäure nicht sulfonierbares Öl enthalten,

(ii) pflanzlichen Ölen und

(iii) bei 20°C im Ölzustand befindlichen höheren Estern ausgewählt wird.

17. System nach Anspruch 16, dadurch gekennzeichnet, dass dieses Öl mindestens einen von

# 0 006 212

diesen höheren Estern enthält, die unter

(1) aus Alkanolen und Alkan- oder Alkensäuren gebildeten Monoestern, insbesondere Äthyl-, Isopropyl-, Butyl- und Isobutyllaurat, -myristat, -palmitat, -stearat, -undecanoat und -oleat;

(2) aus Alkanolen und dicarboxylierten Kohlenwasserstoffen gebildeten Diestern, insbesondere Dialkyladipatenwie Dioctyladipat und Dinonyladipat, Dialkylsebacinaten wie Dibutylsebacinat, Dipentylsebacinat und Dioctylsebacinat, Dialkylazelainaten wie Dioctylazelainat, und Dialkylphthalaten wie Dibutylphthalat, Dioctylphthalat, Didecylphthalat, Bis-(undecyl)-phthalat, Bis-(dodecyl)-phthalat, Bis-(tridecyl)-phthalat, Bis-(tetradecyl)-phthalat und Dicetylphthalat;

(3) aus gegebenenfalls alkylsubstituierten Phenolen und dicarboxylierten Kohlenwasserstoffen gebildeten Diestern, insbesondere Diarylphthalaten wie Diphenylphthalat und Dikresylphthalaten;

(4) aus gegebenenfalls alkylsubstituierten Cycloalkanolen und dicarboxylierten Kohlenwasserstoffen gebildeten Diestern, insbesondere Dicyclohexyl-phthalat und Bis-(methylcyclohexyl)-phthalaten;

(5) aus Phenylalkanolen und dicarboxylierten Kohlenwasserstoffen gebildeten Diestern, insbesondere Dibenzylsebacinat;

(6) aus Alkandiolen und monocarboxylierten Kohlenwasserstoffen gebildeten Diestern, insbe-sondere 2,2,4-Trimethylpentan-1,3-dioldiisobutyrat;

(7) aus gegebenenfalls alkylsubstituierten Phenolen und Phosphorsäure gebildeten Triestern, insbesondere Triphenylphosphat, Tris-(4-tert.-butylphenyl)-phosphat und Trikresylphosphaten; und

(8) aus Alkanolen und Phosphorsäure gebildeten Triestern, insbesondere Trioctylphosphat, ausgewählt werden.

18. System nach einem der Ansprüche 1 bis 17, dadurch gekennzeichnet, dass dieses Insektizid (A) eine Halbwertszeit zwischen 5 und 50 Stunden besitzt, wenn man es bei 70°C in einem auf pH 6 gepufferten Wasser/Äthanolgemisch (4:1 Volumenteile) aufbewahrt.

## Claims

1. Spraying system in aerosol form, comprising a pressurised vessel, a product which can be sprayed in aerosol form, which is intended for combating insects and is contained in the said vessel, and a device for dispensing the product in controlled amounts, which is associated with the vessel, characterised in that the said product comprises, per one hundred parts by weight of formulation:

(A) 0.05 to 3 parts by weight of a solid or liquid organophosphorus insecticide which is insoluble or sparingly soluble in water and which undergoes decomposition in the event of prolonged storage in an aqueous medium, the said insecticide being present in a sufficient amount to control insects,

(B) 0.2 to 10 parts by weight of a hydrocarbon constituent which is liquid at 20°, which has a boiling point between 110 and 250°C and of which at least a tenth of its weight consists of compounds of the aromatic or alkylaromatic series,

(C) 0.1 to 1 part by weight of a surface-active agent chosen from amongst those capable of emulsifying the mixture (A) + (B) in water,

(D) a main propellant chosen from amongst water-soluble compressed gases, with or without an additional propellant chosen from amongst butane and propane, and

(E) water,

the amount of water-miscible organic solvent being less than that which would destabilise the "oil-in-water" emulsion which the mixture (A) + (B) forms with water.

2. Spraying system according to Claim 1, characterised in that the said product comprises, per one hundred parts by weight of formulation, 0.15 to 1 part of the said surface-active agent (C).

3. System according to either one of Claims 1 and 2, characterised in that the propellant is present in an amount of at least one to 40 parts per one hundred parts by weight of formulation.

4. System according to either one of Claims 1 and 2, characterised in that the propellant is a mixture of nitrous oxide and butane and/or propane and/or dimethyl ether, of which between 5 and 20 parts are present in one hundred parts by weight of the formulation.

5. System according to any one of Claims 1 to 4, characterised in that the said product comprises one or more optional constituents (F) chosen from amongst complementary insecticidal substances compatible with the insecticide (A), acaricidal substances, fungicidal substances, oils having a boiling point above 250°C under a pressure of one bar, auxiliary solvents having a boiling point above 80°C, perfumes and buffers capable of bringing the pH of the formulation to between 5 and 7.

6. System according to Claim 5, characterised in that the said system comprises (F) at least one complementary insecticidal substance compatible with the insecticide (A), which makes it possible to boost the insecticidal action of the latter and/or to complement its insecticidal spectrum, and which is soluble in water or in the hydrocarbon (B), without or with an auxiliary solvent (G).

7. System according to Claim 6, characterised in that it comprises at least one auxiliary solvent having a boiling point between 110 and 250°C.

8. System according to Claim 7, characterised in that the said auxiliary solvent is chosen from amongst:

(1) halogenohydrocarbons, in particular 1-chlorooctane, 1-chlorodecane, 1-chlorododecane, 1-

**0 006 212**

bromoheptane, 1-bromooctane, 1,3-dibromopropane, 1,2-dibromobutane, 1,2,3-tribromopropane, hexachloroethane, 1,2-dichlorobenzene, 2-bromotoluene, 4-bromotoluene, 1,3-dichlorobenzene and 4-bromotoluene;

(2) ethers, in particular phenetole, homophenetole, 2-chloroanisole, 4-chloroanisole, 4-methoxytoluene, 3,6-dioxaoctane, 4,7-dioxanonane, 5,9-dioxadodecane, veratrole, 1,3-dimethoxybenzene, 1,4-dimethoxybenzene, 2,5,8-trioxanonane, 3,6,9-trioxaundecane, 1-4,8-dimethyl-3,6,9-trioxatridecane, 5,8,11-trioxapentadecane, 1,3,5-trimethoxybenzene, 1,2,3-trimethoxybenzene, 2,5,8,11-tetraoxadodecane and 2,5,8,11,14-pentaoxapentadecane; and

(3) ketones, in particular heptan-2-one, heptan-3-one, octan-2-one, nonan-5-one, nonan-3-one, 2,6-dimethylheptan-4-one, acetonylacetone, cyclohexanone, 2-methylcyclohexanone, 3-methylcyclohexanone, 4-methylcyclohexanone, isophorone, 3,3,5-trimethylcyclohexanone, fenchone, beta-thujone, acetophenone, propiophenone, pivalophenone, isobutyrophenone, 4-methylacetophenone and 4-methoxyacetophenone.

9. System according to Claim 8, characterised in that the ether chosen as the auxiliary solvent has a molecular weight above 140.

10. System according to Claim 6, characterised in that the said complementary insecticidal substance is chosen from amongst pyrethrinoids, such as natural pyrethrins, allethrin, bioallethrin, S-bioallethrin, resmethrin, bioresmethrin, phenothrin, d-phenothrin, permethrin, tetramethrin, kadethrin, decamethrin and fenvalerate, or from amongst organochlorine compounds, such as hexachloro-cyclohexanes, lindane, DDT, methoxychlor, Perthane, Toxaphene, chlordane, heptachlor, aldrin, dieldrin, isodrin and endrin.

11. System according to any one of Claims 5 to 10, characterised in that at least one of the optional constituents is an acaricide chosen from amongst chloropropylate, bromopropylate, chlorobenzilate, BCPE and dicofol.

12. System according to any one of Claims 4 to 11, characterised in that at least one of the optional constituents is a fungicide.

13. System according to Claim 12, characterised in that the fungicide is chosen from amongst chloranil, dichlone, dithianon, dinocap, captan, folpet, captafol, chlorothalonil, dodemorph, dichlo-fluanid, chloropicrin, thiabendazole and 1-isopropyl-2-(benzothiazol-2-yl)-urea.

14. System according to any one of Claims 4 to 13, characterised in that at least one of the optional constituents is an oil having a boiling point above 250°C under a pressure of one bar, which is chosen from amongst

(a) oils acceptable for use in plant hygiene, and

(b) oils acceptable for combating house insects.

15. System according to Claim 14, characterised in that the said oil is an oil acceptable for use in plant hygiene, which is chosen from amongst paraffinic mineral oils containing more than 70 and up to 100 per cent by weight of oil which cannot be sulphonated by sulphuric acid.

16. System according to Claim 14, characterised in that the said oil is an oil acceptable for combating house insects, which is chosen from amongst

(i) paraffinic mineral oils containing between 0 and 70 per cent by weight of oil which cannot be sulphonated by sulphuric acid,

(ii) vegetable oils, and

(iii) higher esters existing in the form of an oil at 20°C.

17. System according to Claim 16, characterised in that the said oil contains at least one of the said higher esters, chosen from amongst

(1) monoesters formed between alkanols and alkanoic or alkenoic acids, in particular ethyl, isopropyl, butyl and isobutyl laurates, myristates, palmitates, stearates, undecanoates and oleates;

(2) diesters formed between alkanols and dicarboxylated hydrocarbons, in particular dialkyl adipates, such as dioctyl adipate and dinonyl adipate, dialkyl sebacates, such as dibutyl sebacate, dipentyl sebacate and dioctyl sebacate, dialkyl azelates, such as dioctyl azelate, and dialkyl phthalates, such as dibutyl phthalate, dioctyl phthalate, didecyl phthalate, bis-(undecyl) phthalate, bis-(dodecyl) phthalate, bis-(tridecyl) phthalate, bis-(tetradecyl) phthalate and dicetyl phthalate;

(3) diesters formed between alkyl-substituted or unsubstituted phenols and dicarboxylated hydrocarbons, in particular diaryl phthalates, such as diphenyl phthalate and dicresyl phthalates;

(4) diesters formed between alkyl-substituted or unsubstituted cycloalkanols and dicarboxylated hydrocarbons, in particular dicyclohexyl phthalate and bis-(methylcyclohexyl) phthalates;

(5) diesters formed between phenylalkanols and dicarboxylated hydrocarbons, in particular dibenzyl sebacate;

(6) diesters formed between alkanediols and monocarboxylated hydrocarbons, in particular 2,2,4-trimethylpentane-1,3-diol diisobutyrate;

(7) triesters formed between alkyl-substituted or unsubstituted phenols and phosphoric acid, in particular triphenyl phosphate, tris-(4-tert.-butyl-phenyl) phosphate and tricresyl phosphates; and

(8) triesters formed between alkanols and phosphoric acid, in particular trioctyl phosphate.

23

18. System according to any one of Claims 1 to 17, characterised in that the said insecticide (A) has a half-life between 5 and 50 hours when it is kept at 70°C in a water/ethanol mixture (4:1 parts by volume) buffered to pH 6.